# EUROPÄISCHE PATENTSCHRIFT

(11) **EP 2 422 058 B1**
(45) Veröffentlichungstag und Bekanntmachung des Hinweises auf die Patenterteilung: **12.12.2012**
(21) Anmeldenummer: 10716317.2
(22) Anmeldetag: 20.04.2010
(51) Int. Cl.: F01N 3/20, F01N 3/28

(54) **MEHRSTUFIG BEHEIZBARER WABENKÖRPER**
HONEYCOMB BODY HEATABLE IN MULTIPLE STAGES
CORPS EN NID D'ABEILLES POUVANT ÊTRE CHAUFFÉ SUR PLUSIEURS NIVEAUX

(30) Priorität: 22.04.2009 DE 102009018182
(43) Veröffentlichungstag der Anmeldung: 29.02.2012
(73) Patentinhaber: Emitec Gesellschaft für Emissionstechnologie mbH, 53797 Lohmar (DE)
(72) Erfinder: DÜSTERDIEK, Thorsten, 30659 Hannover (DE); DORENKAMP, Richard, 12623 Berlin (DE); NAGEL, Thomas, 51766 Engelskirchen (DE); HODGSON, Jan, 53840 Troisdorf (DE); SCHEPERS, Sven, 53844 Troisdorf (DE); KRUSE, Carsten, 53842 Troisdorf (DE)
(74) Vertreter: Rössler, Matthias
(86) Internationale Anmeldenummer: PCT/EP2010/055163
(87) Internationale Veröffentlichungsnummer: WO 2010/122005

(56) Entgegenhaltungen:
- WO-A1-90/12951
- WO-A1-92/13636
- DE-A1- 10 051 562
- US-A- 5 288 470

## Beschreibung

Die vorliegende Erfindung betrifft einen elektrisch beheizbaren Wabenkörper, der von einem Fluid, insbesondere einem Abgas, durchströmbar ist. Darüber hinaus betrifft die Erfindung auch ein Kraftfahrzeug mit einem entsprechenden beheizbaren Wabenkörper sowie ein Verfahren zur Beheizung eines Wabenkörpers.

Derartige Wabenkörper finden regelmäßig Verwendung als Kontaktoberfläche für das Aufheizen von Fluiden und ggf. auch als Trägerkörper für Katalysatoren, die zur katalytischen Umsetzung reagibler Bestandteile von Fluiden bestimmt sind. Ein bedeutsames Anwendungsgebiet für solche elektrisch beheizbaren Wabenkörper mit (ggf. in Strömungsrichtung nachfolgenden) Katalysatoren ist die katalytische Reinigung von Abgasen aus Verbrennungskraftmaschinen, insbesondere aus Verbrennungskraftmaschinen in Kraftfahrzeugen. Hierbei werden die katalytisch beschichteten Wabenkörper in dem Abgassystem der Verbrennungskraftmaschinen angewendet und von den beim Betrieb der Verbrennungskraftmaschinen anfallenden Abgasen durchströmt.

Katalysatoren entfalten ihre katalytische Wirkung üblicherweise erst oberhalb bestimmter sogenannter "Anspringtemperaturen". Für Katalysatoren zur Umsetzung von Schadstoffen in Abgasen üblicher Verbrennungskraftmaschinen liegen die Anspringtemperaturen regelmäßig bei einigen 100° Celsius (z. B. bei ca. 250 °C). Mithin muss ein solcher Katalysator, insbesondere während der Startphase einer Verbrennungskraftmaschine, bei der die Verbrennungsabgase regelmäßig eine vergleichsweise geringe Temperatur aufweisen, aufgeheizt werden, um seine katalytische Aktivität möglichst frühzeitig zu erreichen oder während des Betriebes aufrecht zu erhalten.

Ein beheizbarer Wabenkörper ist bspw. aus der WO 92/13636 A1 bekannt, wobei dieser Wabenkörper aus zwei Scheiben aufgebaut ist. Diese zwei Scheiben des Wabenkörpers sind voneinander beabstandet und mit Hilfe von Stützen miteinander verbunden. Diese Ausbildung ermöglicht, eine erste Scheibe im Hinblick auf eine schnelle Aufheizbarkeit durch die Durchleitung von elektrischem Strom auszulegen. Hierbei weist diese Scheibe mehrere Heizbereiche auf, die elektrisch in Reihe geschaltet sind. Dadurch ist eine gezielte Beheizung bestimmter Bereiche mit unterschiedlichen Heizleistungen des Wabenkörpers nicht möglich.

Die WO 90/12951 A1 offenbart einen Wabenkörper aus elektrisch leitfähigen strukturierten Blechen, wobei der Wabenkörper durch elektrisch isolierende Zwischenschichten bzw. Beschichtungen so unterteilt wird, dass sich ein Strompfand zur Beheizung des Wabenkörpers mit einem gewünschten Widerstand ergibt.

Aufgabe der Erfindung ist es daher, die mit Bezug auf den Stand der Technik geschilderten Probleme zumindest teilweise zu lösen und insbesondere einen mehrstufig beheizbaren Wabenkörper anzugeben, der mehrere Heizkreise aufweist, deren Heizleistungen unabhängig voneinander steuerbar sind, wobei bevorzugt auch eine über den angeströmten Querschnitt gleichmäßige Aufheizung des Fluides bzw. eine über den angeströmten Querschnitt gleichmäßige Temperatureinbringung in das Fluid ermöglicht wird. Ferner soll ein Verfahren zur selektiven Beheizung eines Wabenkörpers mit unterschiedlichen Heizleistungen und ein entsprechendes Kraftfahrzeug angegeben werden.

Diese Aufgaben werden gelöst mit einer Vorrichtung gemäß den Merkmalen des Patentanspruchs 1. Weitere vorteilhafte Ausgestaltungen der Erfindung sind in den abhängig formulierten Patentansprüchen angegeben. Es ist darauf hinzuweisen, dass die in den abhängig formulierten Patentansprüchen einzelnen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Der erfindungsgemäße elektrisch beheizbare Wabenkörper mit Kanälen weist zumindest eine Heizscheibe mit zumindest einem ersten Lagenstapel aus einem elektrisch leitfähigen Material und einem zweiten Lagenstapel aus einem elektrisch leitfähigen Material auf, wobei der ersten Lagenstapel und der zweite Lagenstapel miteinander verwunden und voneinander elektrisch isoliert sind, wobei der erste Lagenstapel einen ersten Strompfad zur Durchleitung eines elektrischen Stromes für einen ersten Heizkreis bildet und der zweite Lagenstapel einen zweiten Strompfad zur Durchführung eines elektrischen Stromes für einen zweiten Heizkreis bildet.

Der elektrisch beheizbare Wabenkörper weist zumindest eine Heizscheibe mit zumindest einem ersten Lagenstapel und einem zweiten Lagenstapel auf. Der erste Lagenstapel sowie der zweite Lagenstapel sind bevorzugt aus glatten Lagen und/oder strukturierten Lagen aufgebaut, die (im Wesentlichen parallel zueinander verlaufende) Strömungskanäle bilden. Die glatten Lagen und/oder die strukturierten Lagen sind dazu übereinander geschichtet, wobei die glatten Lagen und/oder die strukturierten Lagen grundsätzlich beliebig kombiniert werden können. Diese glatten bzw. strukturierten Lagen bestehen aus einem elektrisch leitfähigen Material, insbesondere Metall bzw. Metallfolie und können eine Beschichtung aufweisen. Bei dieser Beschichtung kann es sich insbesondere um einen katalytisch aktivierten Washcoat handeln, der durch seine poröse Struktur die Oberfläche und die katalytische Wirksamkeit vergrößert.

Der erste Lagenstapel und der zweite Lagenstapel sind bevorzug entlang einer ersten Faltstelle und einer zweiten Faltstelle gefaltet. Diese erste Faltstelle und zweite Faltstelle erstreckt sich im Wesentlichen parallel zur Mittelachse des Wabenkörpers. Durch die Faltung (Umbiegung, Knickung, etc.) weist der erste Lagenstapel ausgehend von der ersten Faltstelle und der zweite Lagenstapel ausgehend von der zweiten Faltstelle jeweils zwei Lagenschenkel auf. Diese Lagenschenkel sind (beispielsweise durch einen Luftspalt) voneinander elektrisch isoliert. Mit anderen Worten bedeutet dies, dass ein Strom zwischen den beiden Lagenschenkeln eines Lagenstapels nur über die jeweilige Faltstelle des Lagenstapels fließen kann.

Der gefaltete erste Lagenstapel und der gefaltete zweite Lagenstapel sind miteinander bevorzugt S-förmig verschlungen, wobei die erste Faltstelle des ersten Lagenstapels und die zweite Faltstelle des zweiten Lagenstapels bevorzugt im Bereich bzw. nahe der Mittelachse des Wabenkörpers angeordnet sind. Zudem ist die Länge der Zuströmseite des ersten Lagenstapels und die Länge des zweiten Lagenstapels länger als der Durchmesser des Wabenkörpers. Das führt insbesondere dazu, dass die Lagenstapel nicht geradlinig den Durchmesser des Wabenkörpers überspannen, sondern in dieser Ebene (ggf. mehrmals) gekrümmt sind. Die miteinander "verschlungene" Anordnung ergibt sich nun z. B. dadurch, dass die Lagenstapel auch in diesen gekrümmten Abschnitten (mit gleichbleibendem Abstand) einander folgen bzw. auch dort in der Ebene parallel zueinander verlaufen. Eine "Auswölbung" des ersten Stapels folgt demnach einer "Einwölbung" des zweiten Stapels und umgekehrt. Der gekrümmte Verlauf kann insbesondere auch dadurch charakterisiert werden, dass jeder Lagenstapel mehrmals den Durchmesser (also eine Linie durch den geometrischen Mittelpunkt des Wabenkörpers in der (gemeinsamen) Verlaufsebene der Lagenstapel) berührt bzw. schneidet.

Der erste Lagenstapel und der zweite Lagenstapel sind voneinander elektrisch isoliert. Damit werden voneinander unabhängig betreibbare Heizkreise in einer Scheibe bzw. Ebene möglich. Der erste Lagenstapel ist mit einer ersten Stromquelle und der zweite Lagenstapel mit einer (separaten bzw. örtlich getrennten) zweiten Stromquelle elektrisch verbunden, so dass der erste Lagenstapel einen ersten Strompfad zur Durchleitung eines elektrischen Stromes für einen ersten Heizkreis bildet, und der zweite Lagenstapel einen zweiten Strompfad zur Durchleitung eines elektrischen Stromes für einen zweiten Heizkreis bildet. Dadurch, dass der erste Lagenstapel und der zweite Lagenstapel miteinander verwunden sind, sind der erste Heizkreis und der zweite Heizkreis im Wesentlichen über die Stirnfläche des Wabenkörpers gleich verteilt. Dies bedeutet insbesondere, dass der Wabenkörper, sowohl durch den ersten Heizkreis als auch separat durch den zweiten Heizkreis, getrennt, über seine Stirnfläche im Wesentlichen gleichmäßig beheizbar ist. Zudem sind die Heizleistung des ersten Heizkreises und die Heizleistung des zweiten Heizkreises durch die erste Stromquelle und die zweite Stromquelle bevorzugt unabhängig voneinander kontrollierbar und einstellbar.

Grundsätzlich ist die Heizscheibe nicht auf zwei Heizkreise beschränkt. Die Heizscheibe kann vielmehr auch mehr als zwei Lagenstapel aufweisen, die jeweils durch separate Stromquellen mehr als zwei unabhängige Heizkreise bilden. Dabei ist selbstverständlich auch möglich, dass wenigstens einige der Heizkreise eine gemeinsame negative Elektrode nutzen (gemeinsamer Minuspol bzw. gemeinsame elektrische Masse).

In Weiterbildung der Erfindung wird vorgeschlagen, dass der erste Lagenstapel und der zweite Lagenstapel jeweils Lagen aufweisen, deren Lagendicken jeweils unterschiedlich ausgeführt sind. Unter einer Lagendicke wird hier die Materialstärke des elektrisch leitfähigen Materials, insbesondere von Metall bzw. Metallfolien, der Lagen verstanden. Grundsätzlich ist es möglich, dass alle Lagen eines Lagenstapels verschiedene (gleiche oder unterschiedliche) Lagendicken zu allen Lagen eines anderen Lagenstapels aufweisen, dies kann aber auch nur für einen Teil der Lagen gelten. Hierdurch können in vorteilhafter Weise die Lagen der einzelnen Lagenstapel im Hinblick auf die erforderlichen Heizleistungen der einzelnen Heizkreise ausgelegt werden.

Bei einer bevorzugten Ausführungsform betragen die Lagendicken der Lagen des ersten Lagenstapels 25 µm [Mikrometer] bis 35 µm, bevorzugt im Wesentlichen 30 µm, und die Lagendicken der Lagen des zweiten Lagenstapels 35 µm bis 65 µm, bevorzugt im Wesentlichen von 40 µm bis 50 µm. Bevorzugt ist dabei, dass alle Lagen des ersten Lagenstapels eine (gleiche) erste Lagendicke haben und alle Lagen des zweiten Lagenstapels eine (gleiche) zweite Lagendicke.

Eine andere Weiterbildung zeichnet sich dadurch aus, dass sich die Anzahl der Lagen des ersten Lagenstapels von der Anzahl der Lagen des zweiten Lagenstapels unterscheidet. Auch hierdurch können in vorteilhafter Weise die einzelnen Lagenstapel im Hinblick auf die erforderlichen Heizleistungen der jeweiligen Heizkreise ausgelegt werden.

Besonders vorteilhaft ist es, wenn die Lagen des ersten Lagenstapels und die Lagen des zweiten Lagenstapels zumindest unterschiedliche Strukturen oder Beschichtungen aufweisen. Beispielhaft sei hier als Maß für die unterschiedlichen Strukturen die sich ergebende Kanaldichte angegeben, die z. B. im Bereich von 160 cpsi bis 600 cpsi gewählt werden kann. Bei diesen Strukturen kann es sich bspw. um Löcher oder um andere Vorrichtungen zur Beeinflussung des Stromflusses und/oder der Heizleistung zumindest in Teilbereichen der Heizscheibe handeln.

Einem weiteren Aspekt folgend wird auch ein Verfahren zum Beheizen eines Wabenkörpers vorgeschlagen, wobei der erste Heizkreis der Heizscheibe mit einer Leistung von 300 W [Watt] bis 500 W, bevorzugt 350 W bis 450 W, besonders bevorzugt im Wesentlichen 400 W, und der zweite Heizkreis der Heizscheibe mit 500 W bis 700 W, bevorzugt 550 W bis 650 W, besonders bevorzugt im Wesentlichen 600 W, betrieben werden.

Es ist natürlich darauf hinzuweisen, dass die Leistungen des jeweiligen Heizkreises auch an die vorliegenden elektrischen Bordnetze angepasst sein können. So können je nach Applikation (PKW / LKW - 12 V / 24 V) auch elektrische Leistungen pro Heizkreis von 1000 bis 2000 W möglich.

Ferner wird auch ein Kraftfahrzeug mit mindestens einem erfindungsgemäßen Wabenkörper vorgeschlagen, der eingerichtet zur Durchführung des obigen Verfahrens ist.

Bei einem besonders bevorzugten Ausführungsbeispiel weist eine elektrisch beheizbare Wabenkörperanordnung einen (in Strömungsrichtung des Fluides (Abgases) nachgeordneten) Stützkatalysator mit einer Strömungskanaldichte von 300 bis 600 Strömungskanälen pro Quadrat-Inch (cpsi), einer Folienstärke von 40 Mikrometer und einer axialen Stützkatalysatorhöhe von 120 mm auf. Die stirnseitige Abstützung der Heizscheibe erfolgt über eine Vielzahl (elektrisch isolierter) Stützstifte. Beide Trägerstrukturen sind in einem gemeinsamen Gehäuse angeordnet.

Der erste Lagenstapel der Heizscheibe weist eine Strömungskanaldichte von 600 Strömungskanälen pro Inch², eine Folienstärke von 30 µm, eine axiale Heizscheibenhöhe von ca. 7 mm, eine Lagenanzahl von 5 Lagen und eine Leistung von ca. 390 Watt auf. Der zweite Lagenstapel der Heizscheibe weist eine Strömungskanaldichte von 600 cpsi, eine Folienstärke von 40 µm, eine axiale Heizscheibenhöhe von ca. 7 mm, eine Lagenanzahl von 6 Lagen und eine Heizleistung von ca. 600 Watt auf. Beide Lagenstapel sind miteinander im Wesentlichen S-förmig verwunden, verlaufen parallel zueinander (mit gleichbleibenden Spalten zueinander), überspannen gleichmäßig den Strömungsquerschnitt des Abgases und sind (nur) in einem gemeinsamen zylinderförmigen Volumen angeordnet.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Es zeigen schematisch:
Fig. 1: eine erste Ansicht eines beheizbaren Wabenkörpers,
Fig. 2: eine zweite Ansicht des beheizbaren Wabenkörpers,
Fig. 3: Lagen einer Heizscheibe, und
Fig. 4: ein Kraftfahrzeug aufweisend einen erfindungsgemäßen Wabenkörper.

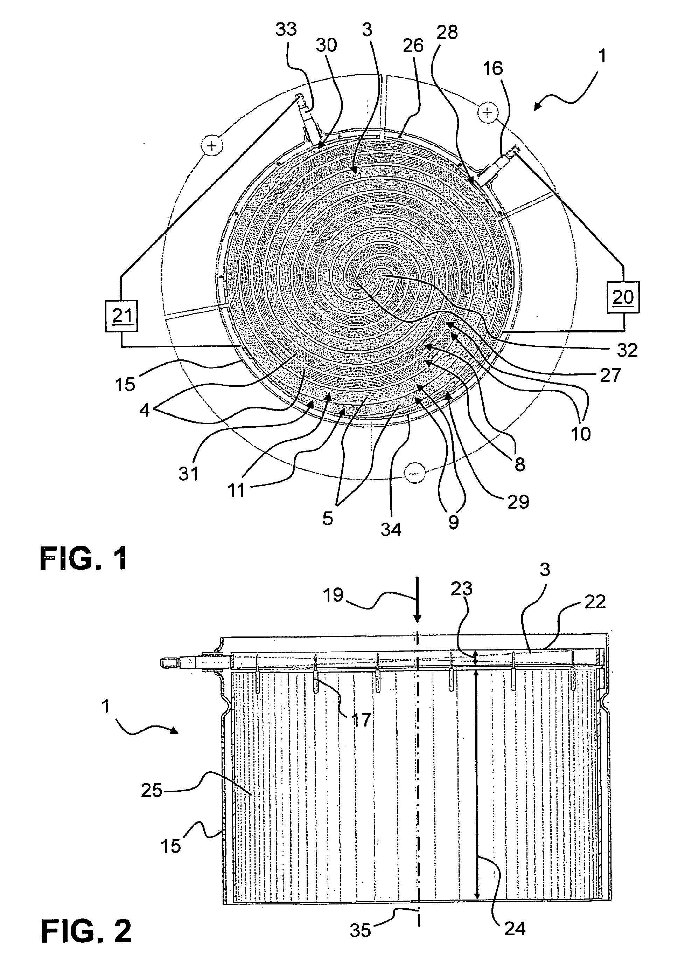

Fig. 1 zeigt einen Wabenkörper 1 aus einer Zuströmrichtung 19 (vgl. Fig. 2) eines Abgases. Dieser Wabenkörper 1 weist ein Gehäuse 15 mit einer ersten positiv polarisierten Elektrode 16, einer zweiten positiv polarisierten Elektrode 33 und einer negativ polarisierten Elektrode 34 auf. Diese erste positiv polarisierten Elektrode 16, zweite positiv polarisierten Elektrode 33 und negativ polarisierten Elektrode 34 sind elektrisch von dem Gehäuse 15 isoliert und grundsätzlich im Aufbau aus dem Stand der Technik bekannt.

In diesem Gehäuse 15 ist eine Heizscheibe 3 im Wesentlichen koaxial zu dem Gehäuse 15 angeordnet und mit Hilfe von Abstandsmitteln 26 von dem Gehäuse 15 beabstandet und elektrisch isoliert. Die Heizscheibe 3 ist aus einem ersten Lagenstapel 4 und aus einem zweiten Lagenstapel 5 gebildet, die miteinander S-förmig verwunden sind. Der erste Lagenstapel 4 weist eine erste Faltstelle 27 und der zweite Lagenstapel 5 weist eine zweite Faltstelle 32 auf, wobei der erste Lagenstapel 4 um diese erste Faltstelle 27 und der zweite Lagenstapel 5 um diese zweite Faltstelle 32 gefaltet ist. Die erste Faltstelle 27 und die zweite Faltstelle 32 erstrecken sich im Wesentlichen parallel zur Mittelachse 35 (vgl. Fig. 2) des Wabenkörpers 1. Ausgehend von der ersten Faltstelle 27 des ersten Lagenstapels 4 und der zweiten Faltstelle 32 des zweiten Lagenstapels 5 erstrecken sich jeweils zwei Faltschenkel des ersten Lagenstapels 4 und des zweiten Lagenstapels 5, die im Bereich der ersten Faltstelle 27 und der zweiten Faltstelle 32 miteinander (elektrisch) verbunden sind, jedoch ansonsten - hier durch einen Luftspalt - voneinander elektrisch isoliert sind.

Die der ersten Faltstelle 27 des ersten Lagenstapels 4 gegenüberliegenden Enden der Faltschenkel sind mit der ersten positiv polarisierten Elektrode 16 und der negativ polarisierten Elektrode 34 elektrisch leitend verbunden. Die der zweiten Faltstelle 32 des zweiten Lagenstapels 5 gegenüberliegenden Enden der Faltschenkel sind mit der zweiten positiv polarisierten Elektrode 33 und der negativ polarisierten Elektrode 34 elektrisch leitend verbunden. So bildet der erste Lagenstapel 4 einen ersten Strompfad 8, der sich von einem ersten Strompfadbeginn 28 im Kontaktbereich mit der ersten positiv gepolten Elektrode 16 über die erste Faltstelle 27 des ersten Lagenstapels 4 bis zu einem ersten Strompfadende 29 im Kontaktbereich mit der negativ gepolten Elektrode 34 erstreckt. Der zweite Lagenstapel 5 bildet einen zweiten Strompfad 9, der sich von einem zweiten Strompfadbeginn 30 im Kontaktbereich mit der zweiten positiv gepolten Elektrode 33 über die zweite Faltstelle 32 bis zu einem zweiten Strompfadende 31 im Kontaktbereich der negativ gepolten Elektrode 34 erstreckt. Klarzustellen ist hier, dass der erste Lagenstapel 4 von dem zweiten Lagenstapel 5 - hier durch einen Luftspalt - elektrisch isoliert ist. Die den ersten Lagenstapel 4 kontaktierende erste positiv polarisierte Elektrode 16 und die negativ polarisierte Elektrode 34 sind mit einer ersten Stromquelle 20 elektrisch leitend verbunden, so dass sich im ersten Lagenstapel 4 ein erster Heizkreis 10 ausbildet. Die den zweiten Lagenstapel 5 kontaktierende zweite positiv polarisierte Elektroden 33 und die negativ polarisierte Elektrode 34 sind mit einer zweiten Stromquelle 21 elektrisch leitend verbunden, so dass im zweiten Lagenstapel 5 ein zweiter Heizkreis 11 ausgebildet ist.

Fig. 2 zeigt den beheizbaren Wabenkörper 1 aus einer seitlichen Schnittansicht. Gezeigt ist ein Stützkatalysator 25 mit einer Stützkatalysatorhöhe 24. An diesem Stützkatalysator 25 ist mit Hilfe von Stützstiften 17 entgegen der Zuströmrichtung 19 des Abgases eine Heizscheibe 3 mit einer Heizscheibenhöhe 23 befestigt. Diese Heizscheibe 3 weist eine Stirnfläche 22 auf, durch die das Abgas in Zuströmrichtung 19 in den beheizbaren Wabenkörper 1 eintritt.

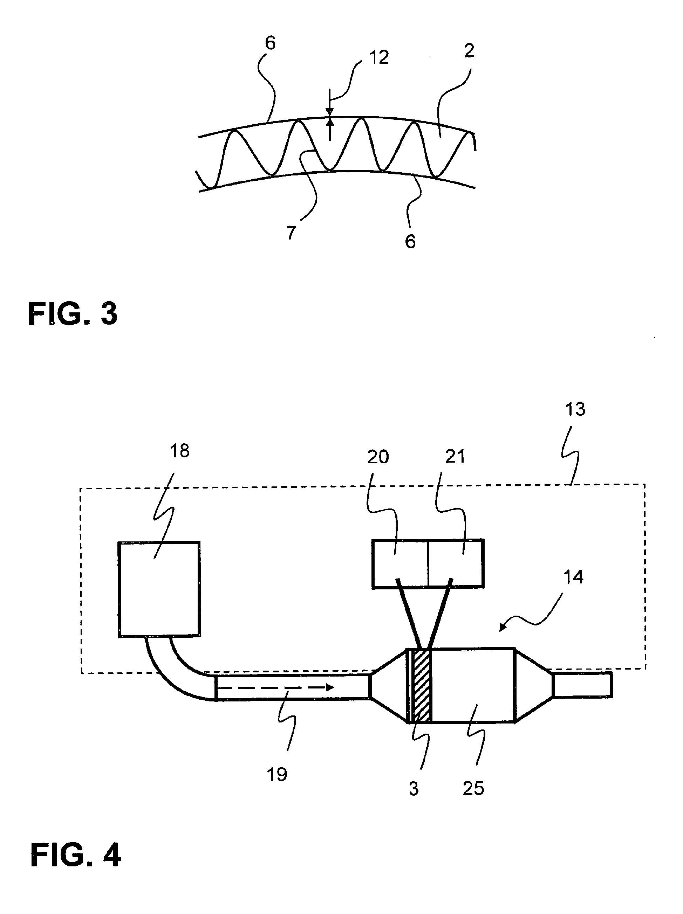

Fig. 3 zeigt zwei glatte Lagen 6 und eine strukturierte Lage 7, durch die der erste Lagenstapel 4 und der zweite Lagenstapel 5 exemplarisch aufgebaut sein können. Diese glatte Lagen 6 und die strukturierte Lage 7 bilden Kanäle 2, durch die Abgas strömen kann. Dabei weisen die glatten Lagen 6 und die strukturierte Lage 7 eine Lagendicke 12 auf.

Aus der Fig. 4 geht ein Kraftfahrzeug 13 mit einer Verbrennungskraftmaschine 18 hervor, wobei in dem Abgassystem 14 der Verbrennungskraftmaschine 18 ein erfindungsgemäßer elektrisch beheizbarer Wabenkörper 1 angeordnet ist.

So kann das Abgas einer Verbrennungskraftmaschine konstruktiv einfach durch mehrere unabhängige Heizkreise in einer gemeinsamen Heizscheibe selbst mit unterschiedlichen Heizleistungen aufgeheizt gleichmäßig werden.

### Bezugszeichenliste

- 1: Wabenkörper
- 2: Kanäle
- 3: Heizscheibe
- 4: erster Lagenstapel
- 5: zweiter Lagenstapel
- 6: glatte Lagen
- 7: strukturierte Lage
- 8: erster Strompfad
- 9: zweiter Strompfad
- 10: erster Heizkreis
- 11: zweiter Heizkreis
- 12: Lagendicke
- 13: Kraftfahrzeug
- 14: Abgassystem
- 15: Gehäuse
- 16: erste positiv polarisierte Elektroden
- 17: Stützstifte
- 18: Verbrennungskraftmaschine
- 19: Zuströmrichtung
- 20: erste Stromquelle
- 21: zweite Stromquelle
- 22: Stirnfläche
- 23: Heizscheibenhöhe
- 24: Stützkatalysatorhöhe
- 25: Stützkatalysator
- 26: Abstandsmittel
- 27: erste Faltstelle
- 28: erster Stompfadbeginn
- 29: erstes Strompfadende
- 30: zweiter Strompfadbeginn
- 31: zweites Strompfadende
- 32: zweite Faltstelle
- 33: zweite positiv polarisierte Elektrode
- 34: zweite negativ polarisierte Elektrode
- 35: Mittelachse

## Patentansprüche

1. Elektrisch beheizbarer Wabenkörper (1) mit Kanälen (2), aufweisend zumindest eine Heizscheibe (3) mit zumindest einem ersten Lagenstapel (4) aus einem elektrisch leitfähigem Material und einem zweiten Lagenstapel (5) aus einem elektrisch leitfähigem Material, wobei der erste Lagenstapel (4) und der zweite Lagenstapel (5) miteinander verschlungen und voneinander elektrisch isoliert sind, wobei der erste Lagenstapel (4) einen ersten Strompfad (8) zur Durchleitung eines elektrischen Stromes für einen ersten Heizkreis (10) bildet und der zweite Lagenstapel (5) einen zweiten Strompfad (9) zur Durchleitung eines elektrischen Stromes für einen zweiten Heizkreis (11) bildet.

2. Elektrisch beheizbarer Wabenkörper (1) nach Patentanspruch 1, wobei der erste Lagenstapel (4) und der zweiten Lagenstapel (5) jeweils Lagen aufweisen, deren Lagendicken (12) jeweils unterschiedlich ausgeführt sind.

3. Elektrisch beheizbarer Wabenkörper (1) nach Patentanspruch 1 oder 2, wobei die Lagendicken (12) der Lagen des ersten Lagenstapels (4) 25 µm bis 35 µm betragen und die Lagendicken (12) der Lagen des zweiten Lagenstapels (5) 35 µm bis 65 um betragen.

4. Elektrisch beheizbarer Wabenkörper (1) nach einem der vorhergehenden Patentansprüche, wobei sich die Anzahl der Lagen des ersten Lagenstapels (4) von der Anzahl der Lagen des zweiten Lagenstapels (5) unterscheidet.

5. Elektrisch beheizbarer Wabenkörper (1) nach einem der vorhergehenden Patentansprüche, wobei die Lagen des ersten Lagenstapels (4) und die Lagen des zweiten Lagenstapels (5) zumindest unterschiedliche Strukturen oder Beschichtungen aufweisen.

## Claims

1. An electrically heatable honeycomb body (1) having channels (2), comprising at least one heating disk (3) having at least one first layer stack (4) made of an electrically conductive material and one second layer stack (5) made of an electrically conductive material, wherein the first layer stack (4) and the second layer stack (5) are interleaved with each other and electrically insulated from each other, wherein the first layer stack (4) forms a first current path (8) for conducting an electrical current for a first heating circuit (10) and the second layer stack (5) forms a second current path (9) for conducting an electrical current for a second heating circuit (11).

2. The electrically heatable honeycomb body (1) as claimed in claim 1, wherein the first layer stack (4) and the second layer stack (5) each have layers, the layer thicknesses (12) of which are each embodied so as to be different.

3. The electrically heatable honeycomb body (1) as claimed in claim 1 or 2, wherein the layer thicknesses (12) of the layers of the first layer stack (4) are 25 µm to 35 µm and the layer thicknesses (12) of the layers of the second layer stack (5) are 35 µm to 65 µm.

4. The electrically heatable honeycomb body (1) as claimed in one of the preceding claims, wherein the number of layers of the first layer stack (4) differs from the number of layers of the second layer stack (5).

5. The electrically heatable honeycomb body (1) as claimed in one of the preceding claims, wherein the layers of the first layer stack (4) and the layers of the second layer stack (5) have at least different structures or coatings.

## Revendications

1. Corps en nid d'abeilles pouvant être chauffé électriquement (1) comportant des canaux (2), comprenant au moins un panneau chauffant (3) comportant au moins un premier empilement de couches (4) constitué d'un matériau électriquement conducteur et un second empilement de couches (5) constitué d'un matériau électriquement conducteur, dans lequel le premier empilement de couches (4) et le second empilement de couches (5) sont enchevêtrés et sont électriquement isolés l'un de l'autre, dans lequel le premier empilement de couches (4) forme un premier trajet de courant (8) pour l'acheminement d'un courant électrique destiné à un premier circuit de chauffage (10) et le second empilement de couches (5) forme un second trajet de courant (9) pour l'acheminement d'un courant électrique destiné à un second circuit de chauffage (11).

2. Corps en nid d'abeilles pouvant être chauffé électriquement (1) selon la revendication 1, dans lequel le premier empilement de couches (4) et le second empilement de couches (5) présentent respectivement des couches dont les épaisseurs de couches (12) sont respectivement mises en oeuvre de manière à ce qu'elles soient différentes.

3. Corps en nid d'abeilles pouvant être chauffé électriquement (1) selon la revendication 1 ou 2, dans lequel les épaisseurs de couches (12) des couches du premier empilement de couches (4) sont de 25 µm à 35 µm et les épaisseurs de couches (12) des couches du second empilement de couches (5) sont de 35 µm à 65 µm.

4. Corps en nid d'abeilles pouvant être chauffé électriquement (1) selon l'une quelconque des revendications précédentes, dans lequel le nombre de couches du premier empilement de couches (4) est différent du nombre de couches du second empilement de couches (5).

5. Corps en nid d'abeilles pouvant être chauffé électriquement (1) selon l'une quelconque des revendications précédentes, dans lequel les couches du premier empilement de couches (4) et les couches du second empilement de couches (5) présentent au moins des structures ou des revêtements différents.
